# EUROPEAN PATENT APPLICATION

(11) **EP 3 809 783 A1**
(43) Date of publication of application: **21.04.2021**
(21) Application number: 18922453.8
(22) Date of filing: 15.06.2018
(51) Int. Cl.: H04W 72/12

(54) **USER DEVICE AND BASE STATION DEVICE**

(71) Applicant: NTT DOCOMO, INC., Chiyoda-ku, Tokyo 100-6150 (JP)
(72) Inventor: YASUKAWA, Shinpei, Tokyo 100-6150 (JP); KUDOU, Riichi, Tokyo 100-6150 (JP); MARUKO, Tomoki, Tokyo 100-6150 (JP)
(74) Representative: Hoffmann Eitle
(86) International application number: PCT/JP2018/023018
(87) International publication number: WO 2019/239603

(57) **Abstract**

A user device includes a reception unit that receives, from a base station apparatus, information indicating allocation of an uplink radio resource; a transmission unit that transmits, to the base station apparatus, information on a timing for generating a packet to be transmitted to the base station apparatus, wherein the information is for requesting adjustment of the allocation of the radio resource; and a control unit that executes uplink transmission based on the information indicating the allocation of the radio resource.

## Description

### TECHNICAL FIELD

The present invention relates to a user device and a base station apparatus in a radio communication system.

### BACKGROUND ART

In LTE (Long Term Evolution) and successor systems of LTE (for example, LTE-A (LTE Advanced),

NR (New Radio) or 5G), use cases have been assumed, such as eMBB (Extended Mobile Broadband), mMTC (massive Machine Type Communication), URLLC (Ultra Reliability and Low Latency Communication) and the like (for example, see Non-Patent Document 1).

URLLC has an object to achieve radio communication with low latency and high reliability. As specific methods for achieving low latency in URLLC, use of Short TTI (Transmission Time Interval) length (also referred to as sub-frame length or sub-frame interval), decrease in latency in control from packet generation until data transmission, and the like have been studied. Furthermore, as specific methods for achieving high reliability in URLLC, implementation of an encoding method and modulating method at a low encoding rate in order to obtain a low bit error rate, utilization of diversity, and the like have been studied (for example, see Non-Patent Document 2).

### Related Art Document

### [Non-Patent Document]

Non-Patent Document 1: 3GPP TR 38.802 V14.2.0 (2017-09)
Non-Patent Document 2: 3GPP TS 38.300 V15.1.0 (2018-03)

### SUMMARY OF THE INVENTION

### [PROBLEM TO BE SOLVED BY THE INVENTION]

It is likely in a URLLC use case that data for transmission with high urgency occurs in a user device abruptly. It is necessary for the user device to transmit the abruptly generated data to a base station apparatus with low latency and high reliability. If the base station apparatus pre-allocates radio resources, shortage in capacity may occur upon an increase in the number of user devices, to cause an increase in latency. Also, if the base station apparatus pre-allocates radio resources, latency may be increased by elongating periodicity of allocating radio resources.

The present invention has been made in view of the above-described point, and an object of the present invention is to perform allocation of a radio resource appropriately for low latency communication.

### [MEANS FOR SOLVING THE PROBLEM]

According to the disclosed technology, there is provided a user device including a reception unit that receives, from a base station apparatus, information indicating allocation of an uplink radio resource; a transmission unit that transmits, to the base station apparatus, information on a timing for generating a packet to be transmitted to the base station apparatus, wherein the information is for requesting adjustment of the allocation of the radio resource; and a control unit that executes uplink transmission based on the information indicating the allocation of the radio resource.

### [ADVANTAGE OF THE INVENTION]

According to the disclosed technology, it is possible to perform allocation of a radio resource appropriately for low latency communication.

### BRIEF DESCRIPTION OF DRAWINGS

Fig. 1 is a diagram illustrating an example of arrangement of a radio communication system in an embodiment of the present invention.
Fig. 2 is a diagram for illustrating an example (1) of operation of the radio communication system.
Fig. 3 is a diagram for illustrating an example (2) of operation of the radio communication system.
Fig. 4 is a sequence diagram for illustrating an operation of a radio communication system in an embodiment of the present invention.
Fig. 5 is a diagram for illustrating an example of operation of a radio communication system in an embodiment of the present invention.
Fig. 6 is a flow chart for illustrating an operation of a user device 20 in an embodiment of the present invention.
Fig. 7 is a diagram illustrating an example of a functional configuration of a base station apparatus 10 in an embodiment of the present invention.
Fig. 8 is a diagram illustrating an example of a functional configuration of the user device 20 in an embodiment of the present invention.
Fig. 9 is a diagram illustrating an example of a hardware configuration of the base station apparatus 10 or the user device 20 in an embodiment of the present invention.

### [EMBODIMENTS OF THE INVENTION]

An embodiment of the present invention is described below by referring to the drawings. Note that the embodiment described below is only one example, and the embodiment to which the present invention is applied is not limited to the following embodiment.

For the operation of a radio communication system of the embodiment of the present invention, existing techniques are used suitably. However, those existing techniques are, for example, the existing LTE, but are not limited to the existing LTE. The term "LTE" used in the present specification should be read to have a broad meaning inclusive of LTE-Advanced and systems later than LTE-Advanced (for example, NR), unless otherwise mentioned.

In the embodiment of the present invention, duplex systems may be a TDD (Time Division Duplex) system, FDD (Frequency Division Duplex) system, or others (for example, Flexible Duplex or the like). In the description below, a method of transmitting a signal with a transmission beam may be digital beamforming in which a signal is multiplied by a predetermined precoding vector (precoded by the precoding vector), or may be analog beamforming in which beamforming is achieved by use of a variable phase device in an RF (Radio Frequency) circuit. Similarly, a method of receiving a signal with a reception beam may be digital beamforming in which a received signal is multiplied by a predetermined weight vector, or may be analog beamforming in which beamforming is achieved by use of a variable phase device in the RF circuit. Hybrid beamforming in combination of the digital beamforming and the analog beamforming may be applied. Also, transmitting a signal with a transmission beam may be expressed as transmission of the signal through a particular antenna port. Similarly, receiving a signal with a reception beam may be expressed as reception of the signal through a particular antenna port. The term of antenna port means a logical antenna port as defined in 3GPP standards or a physical antenna port.

Methods of forming a transmission beam and reception beam are not limited to those methods described above. For example, a method of changing an angle of each antenna in a base station apparatus 10 or a user device 20 having plural antennas may be applied. A method of combining a method of using a precoding vector and a method of changing the angle of the antenna may be applied. Different antenna panels may be switched and utilized. A method of combining methods of using plural combined antenna panels may be applied. Other methods may be applied. Also, plural transmission beams different from one another may be used in, for example, a high frequency band. Using plural transmission beams is referred to as multi-beam operation. Using a single transmission beam is referred to as single beam operation.

In the embodiment of the present invention, "being configured" of a wireless parameter or the like may be being pre-configured or being predetermined of the prescribed value, or may be being configured of the wireless parameter notified by the base station apparatus 10 or the user device 20.

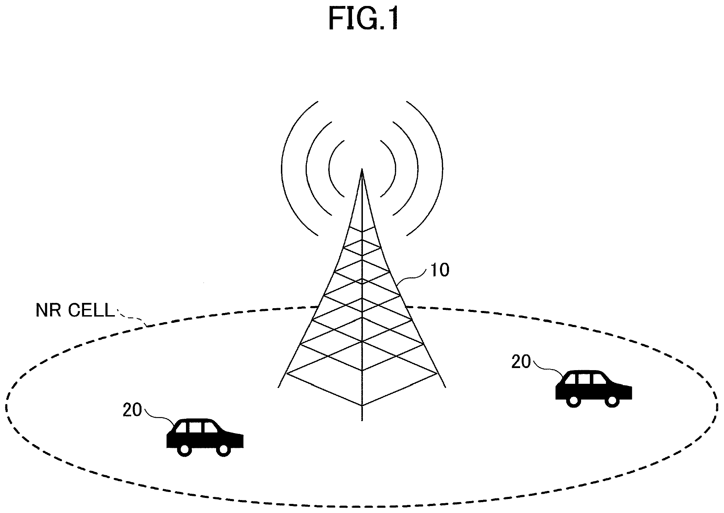

Fig. 1 is a diagram illustrating a configuration example of a radio communication system in the embodiment of the present invention. As illustrated in Fig. 1, the radio communication system in the embodiment of the present invention includes the base station apparatus 10 and the user device 20. In Fig. 1, one base station apparatus 10 and two user devices 20 are illustrated. However, these are examples. The number of base station apparatuses 10 and the user devices 20 may be higher.

The base station apparatus 10 is a communication device which provides one or more cells, and performs radio communication with the user device 20. For example, as illustrated in Fig. 1, the base station apparatus 10 provides an NR cell. The base station apparatus 10 may be referred to as a gNB.

The base station apparatus 10 is a communication device which provides one or more NR cells, and performs radio communication in NR with the user device 20. While the base station apparatus 10 performs communication in NR with the user device 20, another base station apparatus 10 and the base station apparatus 10 may communicate with the user device 20 at the same time by use of dual connectivity (DC: dual connectivity). Both of the base station apparatus 10 and the user device 20 may perform beamforming to transmit/receive signals.

The user device 20 is a communication device having a radio communication function, such as an in-vehicle terminal, M2M (Machine-to-Machine) communication module, smartphone, mobile phone, tablet, wearable terminal, and the like, and wirelessly connects to the base station apparatus 10, and utilizes various communication services provided by the radio communication system. In a step of an initial access or recovery of wireless connection, the user device 20 transmits a preamble signal of random access to the base station apparatus 10 to start a random access procedure. This random access is performed according to the notification information through a PBCH (Physical Broadcast channel) received from the base station apparatus 10, and additionally notification information through a PDSCH (Physical downlink shared channel). In the user device 20, dual connectivity may be possible, to connect with the base station apparatus 10 and with another base station apparatus 10 connected according to information obtained from the base station apparatus 10.

When data to be transmitted is generated in the user device 20, for example, in the UL (Uplink) communication in LTE, first an SR (Scheduling Request) is transmitted to a base station, and allocation of a radio resource is requested to the base station apparatus 10. The base station apparatus 10 notifies the user device 20 of allocation of the radio resource as a UL grant (UL transmission grant). The user device 20 transmits the data in the radio resource identified by the base station.

However, it is likely in URLLC that data that needs to be transmitted occurs abruptly. Performing data transmission based on the UL grant described above is likely not to satisfy a required condition for low latency.

In view of this, Grant free UL multiple access has been studied, in which a UL resource which is overlapped (or orthogonal) is allocated to a plurality of user devices 20 previously by higher layer signaling, so as to enable UL data transmission without receiving a UL grant to the user device 20. For the purpose of enabling the base station apparatus 10 to distinguish and separate data received from a plurality of user devices 20, various methods have been studied, such as a method using code spreading for each user device 20, a method of using interleave, and the like. Grant free UL multiple access is one of effective means in view of obtaining low latency in the UL data transmission. Grant free UL multiple access is a method of UL transmission in which the base station apparatus 10 does not always indicate resource allocation with respect to one or a plurality of Transport blocks for transmission at a certain timing. Grant free UL multiple access may be UL transmission performed by selecting a resource from prescribed or predetermined resource candidates in the user device 20, or may be UL transmission based on SPS (Semi-persistent scheduling) determined in the user device 20 by the base station apparatus 10. Also, a configuration of additionally using a downlink L1 or L2 control signal, for activating or deactivating or updating a radio resource, may be included.

For example, URLLC use cases have been studied in NR, in which high real-time capability and reliability are required, for example, in a robot control in a factory, remote driving of a vehicle, and the like. It is required to transmit periodically generated control information for a robot or vehicle in a real-time manner. For example, real-time capability is expected to such an extent that location information of a vehicle is obtained once per 100 ms.

For UL real-time capability, it is expected to achieve the UL real-time capability by previously allocating a radio resource at a required time interval by the Grant free UL multiple access or by UL transmission according to SPS.

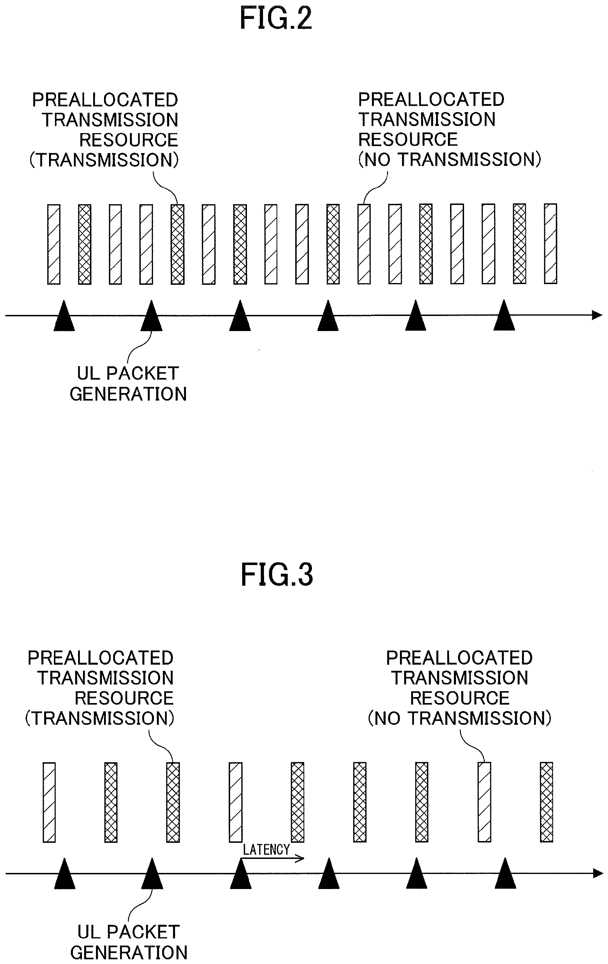

Fig. 2 is a diagram for illustrating an example (1) of operation of the radio communication system. Assuming that numerous resources are pre-allocated in the Grant free UL transmission or UL transmission according to SPS, there is a concern that a problem arises in shortage of communication capacity due to an increase in the number of the user devices 20 for communication. Fig. 2 is a diagram schematically illustrating radio resource allocation in a time region. The "pre-allocated transmission resource (transmission)" illustrated in Fig. 2 is a radio resource actually used in UL transmission by the user device 20. The "pre-allocated transmission resource (no transmission)" is a radio resource not used in UL transmission by the user device 20. The "UL packet generation" denotes a time point of generating a UL packet in the user device 20 for which the pre-transmission allocated resource is allocated and available.

As illustrated in Fig. 2, when a pre-allocated transmission resource is configured by the base station apparatus 10, the user device 20 transmits a UL using the pre-allocated transmission resource immediately after generating the UL packet. If the number of the user devices 20 increases, generation of a UL packet increases, so that failure in transmitting a UL is expected to occur in spite of having generated a UL packet, because of shortage in the pre-allocated transmission resource (no transmission) illustrated in Fig. 2. In contrast, if pre-allocated resources are reserved excessively, allocation of radio resources becomes inefficient, as unused "pre-allocated transmission resources (no transmission)" may increase.

As the user device 20 during the UL transmission cannot perform DL (Downlink) reception simultaneously at least in the same band, it is likely that an error in DL reception occurs if DL transmission has occurred in the same band during the UL transmission. Also, in the pre-allocated transmission resource illustrated in Fig. 2, shortage in radio resources occurs if the number of the user devices 20 increases, both for data and for a control signal (for example, scheduling request). When no UL can be transmitted even upon generation of a UL packet, or when radio resources are reserved excessively, unused radio resources increase so that allocation of radio resources becomes more inefficient.

Fig. 3 is a diagram for illustrating an example (2) of an operation of the radio communication system. Fig. 3 is a diagram schematically illustrating a radio resource allocation in a time region in which a period of a pre-allocated transmission resource is longer than that of Fig. 2. As illustrated in Fig. 3, latency occurs if a period is long until the pre-allocated transmission resource that directly follows a time point of generating the UL packet. If latency increases, it is difficult to efficiently enhance reliability by retransmission or the like. It is noted that latency means time from a time point of generating a UL packet in an application in the user device 20 until performing the UL transmission. Also, latency may be time from a time point of generating a UL packet in the application in the user device 20 until reception at a device to which the UL packet is addressed through the base station apparatus 10.

Furthermore, in the pre-allocated transmission resource illustrated in Fig. 3, latency occurs if a period is long until the pre-allocated transmission resource that directly follows a time point of generation of the UL packet, for data as well as for a control signal.

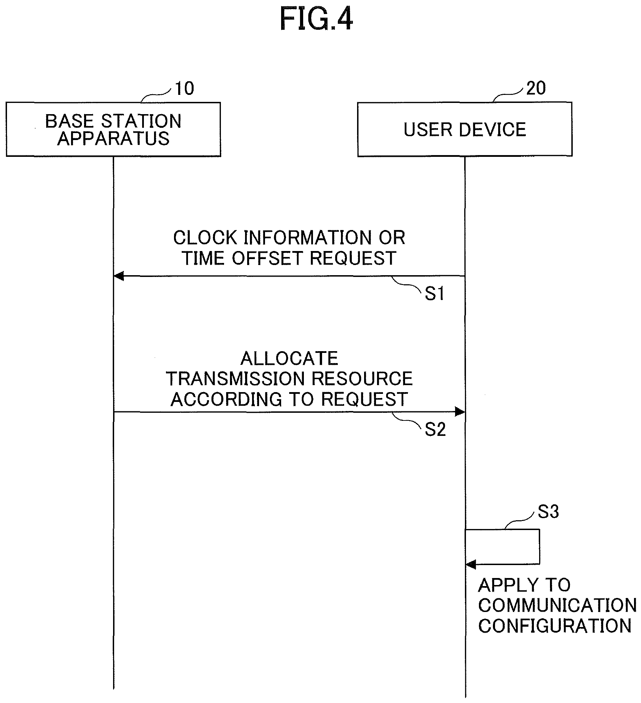

FIG. 4 is a sequence diagram for illustrating an operation of the radio communication system in an embodiment of the present invention. FIG. 4 illustrates an operation by the user device 20 for transmitting, to the base station apparatus 10, clock information for generating UL packets for periodic transmission or event-trigger transmission, or a request for setting a time offset for pre-allocated transmission resources.

In step S1, the user device 20 transmits, to the base station apparatus 10, clock information or information indicating a request for setting a time offset. The clock information may be, for example, a time offset with respect to a time specified by a predetermined SFN (System Frame Number) or a time based on GNSS (Global Navigation Satellite System). In the clock information or the information indicating the request for setting the time offset, a timing is configured that satisfies a maximum latency amount allowed by an application of the user device 20. The timing is suitable for executing a UL transmission after occurrence of a UL packet in the user device 20. The user device 20 requests timing adjustment of the pre-allocated transmission resource by transmitting the timing to the base station apparatus 10.

Note that the pre-allocated transmission resource may be a radio resource for transmitting data, for example, a radio resource for transmitting a control signal for a scheduling request. The clock information or information indicating a request for setting a time offset may be transmitted by a layer 1 or layer 2 control signal, by higher layer signaling, or as BSR (Buffer status report).

Furthermore, the user device 20 may implicitly transmit the clock information or the information indicating the request for setting the time offset to the base station apparatus 10 by transmitting a scheduling request to the base station apparatus 10 at a timing that is closest to and after the timing of the desired clock information or the time offset. The base station apparatus 10 may detect clock information or a time offset desired by the user device 20 based on a time difference between a time point at which the scheduling request is received and a reference timing of the clock information or a pre-allocated transmission resource, and the base station apparatus 10 may modify a configuration of the pre-allocated transmission resource.

Here, the user device 20 may transmit, to the base station apparatus 10, information indicating desired periodicity for allocating radio resources, together with the clock information or the information indicating the request for setting the time offset.

In step S2, the base station apparatus 10 transmits, to the user device 20, information indicating the pre-allocated transmission resource that is adjusted based on the clock information or the request for setting the time offset received in step S1. Low latency communication can be achieved by optimizing the pre-allocated transmission resource with respect to timing or periodicity desired by the application in the user device 20 based on the clock information or the request for setting the time offset received in the step S1.

In step S3, the user device 20 applies the pre-allocated transmission resource received in the step S2 to a configuration of communication, and executes UL transmission using the pre-allocated transmission resource when a UL packet is generated.

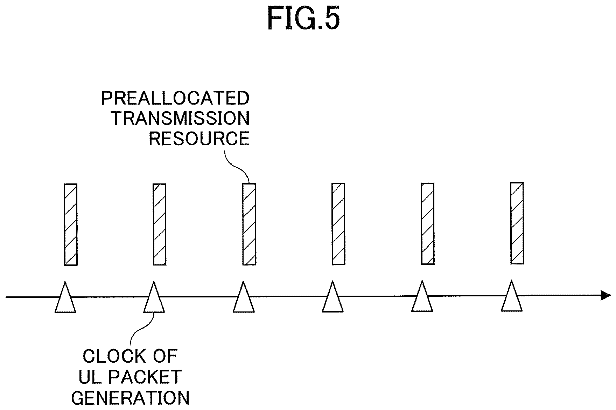

Fig. 5 is a diagram for illustrating an example of an operation of the radio communication system in the embodiment of the present invention. Fig. 5 is an example of a pre-allocated transmission resource allocated in step S2 in Fig. 4. The pre-allocated transmission resource optimized according to a clock of the UL packet generation in the user device 20 is reserved. The user device 20 can execute the UL transmission with low latency using the pre-allocated transmission resource optimized according to the clock of the UL packet generation.

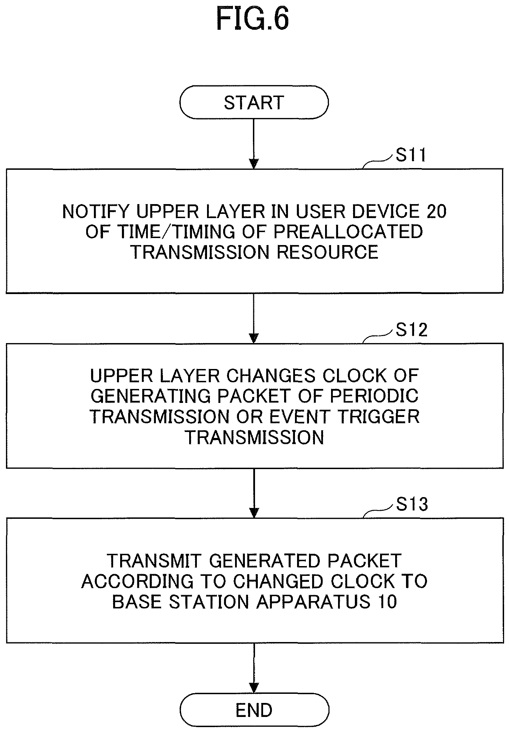

Fig. 6 is a flow chart for illustrating operation of the user device 20 in the embodiment of the present invention. In Fig. 6, the operation in the user device 20 is illustrated, in which timing in a time domain of the pre-allocated transmission resource is notified to an upper layer, and a clock of generating packets of the periodic transmission or event triggered transmission is modified.

In step S11, the user device 20 notifies an upper layer in the user device 20 of time/timing of a pre-allocated transmission resource. An example of the upper layer is an application layer or the like.

Subsequently, in step S12, the upper layer in the user device 20 modifies a clock of generating packets of the periodic transmission or event triggered transmission.

Subsequently, in step S13, the user device 20 transmits the generated packets according to the modified clock to the base station apparatus 10 using the pre-allocated transmission resource.

As the packet is generated according to timing of the pre-allocated resource, the user device 20 can perform the UL transmission with low latency.

Furthermore, the user device 20 may report, to the base station apparatus 10, capability information indicating whether a clock for generating packets can be modified based on a timing of a pre-allocated transmission resource. Furthermore, the user device 20 may report the capability information, while including temporal granularity with which a clock for generating packets can be modified in the capability information. By modifying a pre-allocated transmission resource for the user device 20 that can modify a clock for generating packets based on the capability information, the base station apparatus 10 can give precedence of resource allocation to another user device 20 and the base station apparatus 10 can avoid contention of a transmission resource between the user devices 20. Accordingly, frequency utilization efficiency can be enhanced.

As described above, by generating packets optimized with respect to radio resources pre-allocated by the base station apparatus 10 by an application operated in the user device 20, a low latency communication can be achieved.

Note that, in the pre-allocated transmission resource, data of only a predetermined type may be transmissible. Examples of types of data are a logical channel, bearer or the like. Limiting a resource to be pre-allocated only to packets with high priority makes it possible to limit a resource actually used in the transmission, so as to achieve resource orthogonalization effectively between the user devices 20. In the procedure illustrated in Fig. 4 and Fig. 6, it is possible to apply the method in which data of only a predetermined type may be transmissible in the pre-allocated transmission resource.

The user device 20 need not monitor retransmission or ACK/NACK transmission from the base station apparatus 10 with time exceeding periodicity of the pre-allocated transmission resource or predetermined maximum latency. The user device 20 can reduce a resource required for a HARQ process, and, thus, consumption of a battery can be suppressed. It is possible to apply the method of limiting monitoring of the retransmission or ACK/NACK transmission described above to the procedure illustrated in Fig. 4 and Fig. 6.

According to the above-described embodiments, a low latency communication can be achieved by optimizing a radio resource pre-allocated by the base station apparatus 10 with respect to a timing at which a packet is generated by an application, by transmitting, by the user device 20, clock information or a desired time offset to the base station apparatus 10. The user device 20 can achieve a low latency communication by notifying the application of the timing of the radio resource pre-allocated by the base station apparatus 10 so that the application executes optimized packet generation.

Namely, allocation of a radio resource suitable for a low latency communication can be performed.

### (Device configuration)

An example of a functional configuration of the base station apparatus 10 and the user device 20 for performing processes and operations described above is described next. The base station apparatus 10 and the user device 20 include functions for executing the above-described embodiment. However, each of the base station apparatus 10 and the user device 20 may include only functions of part of the embodiment.

### <Base station apparatus 10>

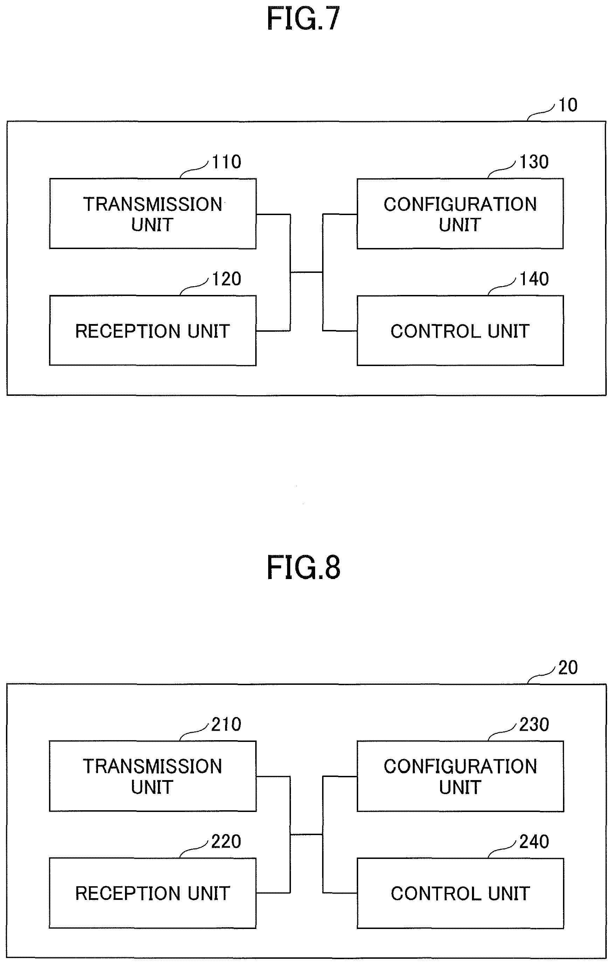

Fig. 7 is a diagram illustrating one example of a functional configuration of the base station apparatus 10. As illustrated in Fig. 7, the base station apparatus 10 includes a transmission unit 110, a reception unit 120, a configuration unit 130 and a control unit 140. The functional configuration illustrated in Fig. 7 is only one example. Division of the functions and names of functional components may be any division and names, as long as the operations related to the embodiments of the present invention can be executed.

The transmission unit 110 includes a function for generating a signal to transmit to the side of the user device 20, and for transmitting this signal wirelessly. The reception unit 120 has a function for receiving various types of signals transmitted by the user device 20, and obtaining information from the received signals, for example, information of a higher layer. Also, the transmission unit 110 has a function for transmitting an NR-PSS, NR-SSS, NR-PBCH, DL/UL control signal and the like to the user device 20. Also, the transmission unit 110 transmits, for example, information indicating that another terminal is approaching to the user device 20. The reception unit 120 receives terminal information from the user device 20.

The configuration unit 130 stores predetermined configuration information, and various items of configuration information to be transmitted to the user device 20, in a storage device, and reads such information from the storage device as required. Contents of the configuration information are, for example, information related to transmission/reception parameters for URLLC.

As described in the embodiment, the control unit 140 performs processing related to configuration for the user device 20 to perform communication to achieve URLLC. Also, the control unit 140 performs processing to notify information related to configuring radio communication to achieve URLLC. A functional component related to the signal transmission in the control unit 140 may be included in the transmission unit 110. A functional component related to the signal reception in the control unit 140 may be included in the reception unit 120.

### <User device 20>

Fig. 8 is a diagram illustrating one example of a functional configuration of the user device 20. As illustrated in Fig. 8, the user device 20 includes a transmission unit 210, a reception unit 220, a configuration unit 230 and a control unit 240. The functional configuration illustrated in Fig. 8 is only one example. Division of the functions and names of functional components can be determined optionally so that tasks related to the embodiment of the present invention can be performed.

The transmission unit 210 generates a signal for transmission from data for transmission, and wirelessly transmits this signal for transmission. The reception unit 220 wirelessly receives various signals, and obtains signals of higher layers from the received signals of the physical layer. Also, the reception unit 220 has functions for receiving an NR-PSS, NR-SSS, NR-PBCH, DL/UL/SL control signal and the like transmitted by the base station apparatus 10. Also, for example, the transmission unit 210 in D2D communication transmits a PSCCH (Physical Sidelink Control Channel), PSSCH (Physical Sidelink Shared Channel), PSDCH (Physical Sidelink Discovery Channel), PSBCH (Physical Sidelink Broadcast Channel) and the like to another user device 20. The reception unit 120 receives a PSCCH, PSSCH, PSDCH, PSBCH or the like from the other user device 20.

The configuration unit 230 stores various items of the configuration information in a storage device, and reads the configuration information from the storage device as required, the configuration information being received by the reception unit 220 from the base station apparatus 10 or the user device 20. Also, the configuration unit 230 stores predetermined configuration information. Contents of the configuration information are, for example, information related to transmission/reception parameters for URLLC.

The control unit 240 performs radio communication for achieving URLLC as described in the embodiment. Also, the control unit 240 receives information related to radio communication from the base station apparatus 10, controls the radio communication in the user device 20 according to this information, and reports required information to the base station apparatus 10. A functional component related to the signal transmission in the control unit 240 may be included in the transmission unit 210. A functional component related to the signal reception in the control unit 240 may be included in the reception unit 220.

### (Hardware configuration)

The diagrams for the functional configuration (Fig. 7 and Fig. 8) used for illustrating the above-described embodiment illustrate blocks in units of functions. These functional blocks (components) are implemented by any combination of hardware and/or software. Furthermore, means for implementing each functional block is not particularly limited. Namely, each functional block may be implemented by a single device with plural elements that are physically and/or logically coupled, or may be implemented by plural devices obtained by directly and/or indirectly (e.g., by wire and/or wirelessly) connecting the two or more devices separated physically and/or logically.

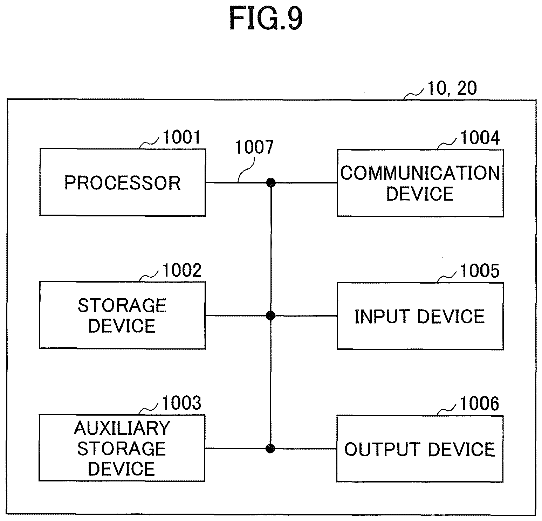

For example, the base station apparatus 10 and the user device 20 in one embodiment of the present invention may function as computers for performing processes related to the embodiment according to the present invention. Fig. 9 is a diagram illustrating one example of a hardware configuration of a radio communication device being the base station apparatus 10 or the user device 20 according to the embodiment of the present invention. Each of the base station apparatus 10 and the user device 20 described above can be configured physically as a computer device including a processor 1001, a storage device 1002, an auxiliary storage device 1003, a communication device 1004, an input device 1005, an output device 1006, a bus 1007 and the like.

Note that, in the following description, the term "apparatus" may be replaced with a circuit, device, unit and the like. The hardware configuration of the base station apparatus 10 and the user device 20 may be configured to include one or more of the respective devices illustrated in the figures and denoted by 1001-1006, or may be configured without including a part of the devices.

The respective functions in the base station apparatus 10 and the user device 20 are accomplished by reading predetermined software (programs) on hardware such as the processor 1001, the storage device 1002 and the like, performing calculation in the processor 1001, and controlling communication in the communication device 1004 and reading and/or writing of data in the storage device 1002 and the auxiliary storage device 1003.

For example, the processor 1001 causes an Operating System to operate so as to control the entire computer. The processor 1001 may be formed of a central processing unit (CPU: Central Processing Unit) including an interface with a peripheral device, control device, arithmetic unit, register, and the like.

Furthermore, the processor 1001 reads a program (program code), software module, or data from the auxiliary storage device 1003 and/or the communication device 1004 to the storage device 1002, and executes various processes in accordance with these. As the program, a program is used that is for causing a computer to execute at least a part of the operation described in the embodiment above. For example, the transmission unit 110, the reception unit 120, the configuration unit 130 and the control unit 140 in the base station apparatus 10 illustrated in Fig. 7 may be implemented by a control program stored in the storage device 1002 and executed by the processor 1001. Also, for example, the transmission unit 210, the reception unit 220, the configuration unit 230 and the control unit 240 in the user device 20 illustrated in Fig. 8 may be implemented by a control program stored in the storage device 1002 and executed by the processor 1001. It is described that the above-described various processes are performed by the single processor 1001, but they may be simultaneously or sequentially performed by two or more processors 1001. The processor 1001 may be implemented by one or more chips. Note that the program may be transmitted from a network through an electrical communication line.

The storage device 1002 is a computer readable recording medium, and may be formed of, for example, at least one of a ROM (Read Only Memory), EPROM (Erasable Programmable ROM), EEPROM (Electrically Erasable Programmable ROM), RAM (Random Access Memory) and the like. The storage device 1002 may be referred to as a register, cache, main memory (main storage device) and the like. The storage device 1002 can store a program (program code), a software module and the like executable for performing processing according to one embodiment of the present invention.

The auxiliary storage device 1003 is a computer readable recording medium, and can be formed of, for example, at least one of an optical disc such as a CD-ROM (Compact Disc ROM), hard disk drive, flexible disc, magneto-optical disk (for example, compact disk, digital versatile disk, and Blu-ray (registered trademark) disk), smart card, flash memory (e.g., card, stick and key drive), floppy (registered trademark) disk, magnetic strip, and the like. The auxiliary storage device 1003 may be referred to as an auxiliary storage device. The above-described storage medium may be, for example, a database, server, or any other appropriate medium, including the storage device 1002 and/or the auxiliary storage device 1003.

The communication device 1004 is hardware (transmission/reception device) for executing communication between computers through a wired and/or wireless network, and is also referred to as, for example, a network device, network controller, network card, communication module, and the like. For example, the transmission unit 110 and the reception unit 120 in the base station apparatus 10 may be implemented by the communication device 1004. Also, the transmission unit 210 and the reception unit 220 in the user device 20 may be implemented by the communication device 1004.

The input device 1005 is an input device for receiving an input from the outside (e.g., a keyboard, mouse, microphone, switch, button, sensor and the like). The output device 1006 is an output device for implementing an output to the outside (e.g., a display, speaker, LED lamp and the like). Note that the input device 1005 and the output device 1006 may be configured to be integrated (for example, a touch panel).

Furthermore, the respective devices, such as the processor 1001 and the storage device 1002, are connected by the bus 1007 for communication of information. The bus 1007 may be formed of a single bus, or may be formed of different buses among the devices.

Furthermore, the base station apparatus 10 and the user device 20 may be constituted to include hardware, such as a microprocessor, digital signal processor (DSP: Digital Signal Processor), ASIC (Application Specific Integrated Circuit), PLD (Programmable Logic Device), FPGA (Field Programmable Gate Array), and the like. By the hardware, a part of or all of the functional blocks may be implemented. For example, the processor 1001 may be implemented by at least one of these hardware components.

### (Conclusion of the embodiments)

As described above, according to the embodiments of the present invention, there is provided a user device including a reception unit that receives, from a base station apparatus, information indicating allocation of an uplink radio resource; a transmission unit that transmits, to the base station apparatus, information on a timing for generating a packet to be transmitted to the base station apparatus, wherein the information is for requesting adjustment of the allocation of the radio resource; and a control unit that executes uplink transmission based on the information indicating the allocation of the radio resource.

According to the above-described configuration, a low latency communication can be achieved by optimizing a radio resource pre-allocated by the base station apparatus 10 with respect to a timing of generating a packet by an application, by transmitting, by the user device 20, clock information or a desired time offset to the base station apparatus 10. Namely, a radio resource suitable for a low latency communication can be allocated.

The information on the timing for generating the packet may be a time offset with respect to one of a time at which the radio resource is allocated, a time specified by a predetermined SFN (System Frame Number), and a time based on a GNSS (Global Navigation Satellite System). With this configuration, a low latency communication can be achieved by optimizing a radio resource pre-allocated by the base station apparatus 10 with respect to a timing at which a packet is generated by an application, by transmitting, by the user device 20, clock information or a desired time offset to the base station apparatus 10.

The transmission unit may transmit, to the base station apparatus, information on capability of modifying a clock for the timing at which the packet is generated. With this configuration, the user device 20 can report, to the base station apparatus 10, that a timing for generating a packet by an application can be modified, and, thus, the base station apparatus 10 can flexibly allocate a radio resource. Accordingly, frequency utilization efficiency can be enhanced by avoiding contention of a radio resource between user devices 20.

The information on the capability of modifying the clock for the timing at which the packet is generated may include time granularity with which the clock for generating the packet can be modified. With this configuration, the user device 20 can report, to the base station apparatus 10, that a timing and granularity for generating a packet by an application can be modified, and, thus, the base station apparatus 10 can flexibly allocate a radio resource. Accordingly, frequency utilization efficiency can be enhanced by avoiding contention of a radio resource between user devices 20.

The user device according to claim 1, wherein the allocated radio resource is capable of transmitting only a configured data type. According to this configuration, a resource that is actually used for transmission can be limited, by limiting packets so that only packets with a high priority level are transmitted. Accordingly, contention of a radio resource between user devices 20 can be avoided.

Furthermore, according to the embodiments of the present invention, there is provided a base station apparatus including a transmission unit that transmits, to a user device, information indicating allocation of an uplink radio resource; a reception unit that receives, from the user device, information on a timing at which a packet to be received by the base station apparatus is generated, wherein the information is for requesting adjustment of the allocation of the radio resource; and a control unit that adjusts the allocation of the radio resource based on the information on the timing at which the packet is generated.

According to the above-described configuration, a low latency communication can be achieved by optimizing a radio resource pre-allocated by the base station apparatus 10 with respect to a timing of generating a packet by an application, by transmitting, by the user device 20, clock information or a desired time offset to the base station apparatus 10. Namely, a radio resource suitable for a low latency communication can be allocated.

### (Supplemental embodiment)

The embodiments of the present invention have been described above; however, the disclosed invention is not limited to the embodiments, and a person ordinarily skilled in the art will appreciate various variations, modifications, alternatives, replacements and the like. Specific examples of numerical values are used in the description in order to facilitate understanding of the invention, but these numerical values are merely examples, and any appropriate values may be used, unless otherwise indicated. Divisions of the described items in the above description are not essential to the present invention. Depending on necessity, subject matter described in two or more described items may be combined and used, and subject matter described in a described item may be applied to subject matter described in another described item (unless contradicted). A boundary of a functional component or a processor in the functional block diagrams may not necessarily correspond to a boundary of a physical part. An operation by a plurality of functional components may be physically executed by a single part, or an operation of a single functional component may be physically executed by a plurality of parts. In the processing procedures described in the embodiment, the order can be changed reversely, unless those are contradicted. For the convenience of description, the base station apparatus 10 and the user device 20 are described by using the functional block diagrams; however, such devices may be implemented in hardware, software, or combinations thereof. The software to be operated by the processor included in the base station apparatus 10 in accordance with the embodiment of the present invention, and the software to be operated by the processor included in the user device 20 in accordance with the embodiment of the present invention may be respectively stored in any appropriate storage medium, such as a random access memory (RAM), flash memory, read-only memory (ROM), EPROM, EEPROM, register, hard disk drive (HDD), removable disk, CD-ROM, database, server and the like.

Notification of information is not limited to the aspects/embodiment described in this specification, and may be given by any other methods. For example, the notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB))), or other signals, or a combination thereof. Further, the RRC signaling may be referred to as an RRC message and may be, for example, an RRC Connection Setup message, an RRC Connection Reconfiguration message, or the like.

Each of aspects/embodiment described in the present specification may be applied to LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), a system using other appropriate systems, and/or a next generation system expanded based on these systems.

The processing procedures, the sequences, the flow charts and the like of the respective aspects/embodiment described in this specification may be reversed in order unless there is a contradiction. For example, the method described in this specification presents elements of various steps in an exemplary order and is not limited to a presented specific order.

A specific operation disclosed to be performed in the base station apparatus 10 in the present specification may be performed in an upper node in some cases. In a network composed of one or plurality of network nodes having the base station apparatus 10, it is apparent that various operations that are performed for communication with the user device 20 can be performed by the base station apparatus 10 and/or another network node different from the base station apparatus 10 (e.g. MME or S-GW, though not limited thereto). Although the case where another network node different from the base station apparatus 10 is single is described in the example above, a combination of a plurality of other network nodes (e.g. MME and S-GW) may be used.

The respective aspects/embodiment disclosed in the present specification can be used singly, used in combination, and used by switching in operation.

The user device 20 can be also referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or several other appropriate terms.

The base station apparatus 10 may be referred to by those skilled in the art as NB (NodeB), eNB (evolved NodeB), gNB, base station (Base Station) or several other appropriate terms.

The terms "determining" and "determining" used in this specification may include a wide variety of actions. For example, "determining" and "determining" may include events in which events such as judging, calculating, computing, processing, deriving, investigating, looking up (for example, looking up in a table, a database, or another data structure), or ascertaining are regarded as "determining" or "determining." Further, "determining" and "determining" may include events in which events such as receiving (for example, receiving information), transmitting (for example, transmitting information), input, output, or accessing (for example, accessing data in a memory) are regarded as "determining" or "determining." Further, "determining" and "determining" may include events in which events such as resolving, selecting, choosing, establishing, or comparing are regarded as "determining" or "determining." In other words, "determining" and "determining" may include events in which a certain operation is regarded as "determining" or "determining."

As used in the present specification, the phrase "based on" does not mean "based only on" unless explicitly stated otherwise. In other words, the phrase "based on" means both "based only on" and "based on at least".

As long as the terms "include", "including", and variations thereof are used in the specification or claims, these terms are intended to be inclusive in a manner similar to the term "comprising". Furthermore, it is intended that the term "or" used in the specification or claims is not an "exclusive OR".

In the entirety of the present disclosure, if an article is added by translation, for example a, an and the in English, the elements with those articles can encompass a plurality of elements, unless otherwise indicated apparently in the context.

It is noted in the embodiment of the present invention that the clock information and time offset request are examples of information related to timing of packet generation.

Although the present invention is described in detail heretofore, it is apparent to those skilled in the art that the present invention is not limited to the embodiments described in this specification. The present invention can be implemented as a modified and changed form without deviating from the gist and scope of the present invention defined by the claims. Accordingly, the description of the present specification is given solely by way of illustration and does not have any restrictive meaning to the present invention.

### LIST OF REFERENCE SYMBOLS

- 10: base station apparatus
- 110: transmission unit
- 120: reception unit
- 130: configuration unit
- 140: control unit
- 20: user device
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device

## Claims

1. A user device comprising:
a reception unit that receives, from a base station apparatus, information indicating allocation of an uplink radio resource;
a transmission unit that transmits, to the base station apparatus, information on a timing for generating a packet to be transmitted to the base station apparatus, wherein the information is for requesting adjustment of the allocation of the radio resource; and
a control unit that executes uplink transmission based on the information indicating the allocation of the radio resource.

2. The user device according to claim 1, wherein the information on the timing for generating the packet is a time offset with respect to one of a time at which the radio resource is allocated, a time specified by a predetermined SFN (System Frame Number), and a time based on a GNSS (Global Navigation Satellite System).

3. The user device according to claim 1, wherein the transmission unit transmits, to the base station apparatus, information on capability of modifying a clock for the timing at which the packet is generated.

4. The user device according to claim 3, wherein the information on the capability of modifying the clock for the timing at which the packet is generated includes time granularity with which the clock for generating the packet can be modified.

5. The user device according to claim 1, wherein the allocated radio resource is capable of transmitting only a configured data type.

6. A base station apparatus comprising:
a transmission unit that transmits, to a user device, information indicating allocation of an uplink radio resource;
a reception unit that receives, from the user device, information on a timing at which a packet to be received by the base station apparatus is generated, wherein the information is for requesting adjustment of the allocation of the radio resource; and
a control unit that adjusts the allocation of the radio resource based on the information on the timing at which the packet is generated.
